# EUROPÄISCHE PATENTSCHRIFT

(11) **EP 1 656 635 B1**
(45) Veröffentlichungstag und Bekanntmachung des Hinweises auf die Patenterteilung: **04.04.2007**
(21) Anmeldenummer: 04763470.4
(22) Anmeldetag: 24.07.2004
(51) Int. Cl.: G06K 19/077

(54) **VERFAHREN UND VORRICHTUNG ZUR HERSTELLUNG VON CHIPKARTEN**
METHOD AND DEVICE FOR PRODUCING CHIP CARDS
PROCEDE ET DISPOSITIF DE FABRICATION DE CARTES A PUCE

(30) Priorität: 16.08.2003 DE 10337645
(43) Veröffentlichungstag der Anmeldung: 17.05.2006
(73) Patentinhaber: Mühlbauer AG, 93426 Roding (DE)
(72) Erfinder: BRANDL, Franz, 93455 Sattelpeilnstein/Traitsching (DE); LAKHADANAU, Siarhei, 93426 Roding (DE); PRAKAPENKA, Uladimir, 93426 Roding (DE)
(74) Vertreter: Hannke, Christian
(86) Internationale Anmeldenummer: PCT/EP2004/008305
(87) Internationale Veröffentlichungsnummer: WO 2005/020136

(56) Entgegenhaltungen:
- WO-A-99/21131
- FR-A- 2 764 414

## Beschreibung

Die Erfindung betrifft eine Verfahren und eine Vorrichtung zur Herstellung von Chipkarten mit einem ersten Bauteil, das eine erste Kontaktfläche umfasst, und einem zweiten Bauteil, welches eine zweite Kontaktfläche umfasst, wobei beide Kontaktflächen mit einer elektrisch leitfähigen Masse verbunden werden, gemäß den Oberbegriffen der Patentansprüche 1 und 9.

Chipkarten, wie Dual-Inferface-Karten weisen elektrisch leitfähige Massepunkte, wie flexible bumbs, zwischen den Kontaktflächen an der Rückseite eines Chipmoduls und einer in der Chipkarte integrierten Antenne auf, um diese Bauteile miteinander elektrisch zu kontaktieren. Ein derartiger Aufbau ist aus der DE 195 00 925 A1 bekannt. Der Leitklebstoff wird hierbei mittels einer Dosiereinrichtung auf die Kontaktflächen der im Kartenkörper eingebauten Antenne aufgetragen. Bei der Auftragung des Leitklebstoffs ist entscheidend, dass eine genau bemessene Menge an Klebstoff an einem genau vorbestimmten Ort aufgetragen wird, so dass eine Erhebung eines derartigen flexible bumb relativ zur Montage, die durch eine Oberfläche eines Kartenkörpers vorgegeben ist, von Karte zu Karte immer gleich ist. Sowohl eine zu kleine als auch eine zu große Menge des flexible-bumb-Materials führt zu einer fehlerhaften Kontaktierung der beiden Kontaktflächen. Hierbei ist zu berücksichtigen, dass es sich bei Kontaktflächen von Bauteilen innerhalb der Chipkarten um Flächen mit sehr geringen Abmessungen handelt.

Die Funktionalität einer Chipkarte hängt maßgeblich von der Auftragshöhe der flexible bumbs und damit von der Dosierung des flexible-bumb-Materials als elektrisch leitfähige Masse ab, so dass der Dispensationsvorgang der leitfähigen Masse bezogen auf eine große Anzahl von herzustellenden Chipkarten eine zuverlässige und schnelle Messung der Auftragshöhe von jeder Masse einer jeden Chipkarte erfordert. Bevorzugt wird hierbei insbesondere ein berührungsloser Messvorgang zur Kontrolle der Auftragshöhe der einzelnen Massen, um ein schnelles Kontrollverfahren ohne die Gefahr einer Beschädigung der aufgetragenen Masse oder anderer Teile der Chipkarte zu ermöglichen.

Zwar ist aus der DE 197 47 388 C1 ein derartiges berührungsloses Messverfahren mittels einer stattfindenden elektrischen Entladung zwischen der leitfähigen Masse und einer darüber mit einem vorbestimmten Abstand angeordneten Messelektrode bekannt, jedoch ist hierfür zum einen die Anordnung der Messelektrode und der Chipkarte innerhalb eines Gasraumes zur Durchführung des Entladungsvorganges und zum anderen das Anlegen von elektrischen Spannungen erforderlich, die eine vorzeitige Beschädigung von Teilen der Chipkarte zur Folge haben können.

Demzufolge liegt der vorliegenden Erfindung die Aufgabe zugrunde, ein Verfahren und eine Vorrichtung zur Herstellung von Chipkarten derart zur Verfügung zu stellen, dass die Funktionalität jeder Chipkarte unter Einbeziehung einer einfachen, schnellen und für die Chipkarte unschädlichen berührungslosen Messung von elektrisch leitfähig aufgetragenen Massen zur Kontaktierung zwischen mindestens zwei Kontaktflächen sichergestellt wird.

Diese Aufgabe wird verfahrensseitig durch die Merkmale des Patentanspruches 1 und vorrichtungsseitig durch die Merkmale des Patentanspruches 9 gelöst.

Ein wesentlicher Punkt der Erfindung liegt darin, dass bei einem Verfahren zur Herstellung von Chipkarten mit einem mindestens eine erste Kontaktfläche aufweisenden ersten Bauteil und einem in oder auf einem Kartenkörper angeordneten zweiten Bauteil mit einer zweiten Kontaktfläche, auf welcher eine elektrisch leitfähige Masse mittels einer Dosiereinrichtung aufgetragen wird, in einem ersten Schritt der Kartenkörper mittels einer Biegeeinrichtung gebogen wird und in einem zweiten Schritt ein Lichtstrahl seitlich auf die aufgetragene Masse zur Messung einer Auftragshöhe der Masse relativ zum Kartenkörper mittels einer optischen Abbildung der Auftragshöhe gerichtet wird. Hierbei kann das erste Bauteil beispielsweise ein in einer Ausnehmung des Kartenkörpers einzusetzendes Chipmodul sein, an dessen Rückseite die erste Kontaktfläche angeordnet ist und bei dem zweiten Bauteil kann es sich um eine in dem Kartenkörper integrierte Antenne handeln, deren Anschluss die nach oben zum Chipmodul hinweisende zweite Kontaktfläche aufweist. Da demzufolge die elektrisch leitfähige Masse in Form eines Leitklebstoffes und/oder eines flexible bumbs innerhalb der Ausnehmung auf der zweiten Kontaktfläche anzuordnen ist, kann eine optische Messung mittels des seitlich einfallenden Lichtstrahles an der Masse nur dann erfolgen, wenn diese vorteilhaft durch den Biegevorgang hervorgehoben wird. Die kontrollierte Biegung des Kartenkörpers ohne dessen Zerstörung oder Beeinträchtigung in seiner Funktionalität wird nämlich derart durchgeführt, dass der Kartenkörper in seinem Verlauf eine Krümmung aufweist und die aufgetragene Masse krümmungsaußenseitig angeordnet ist. Auf diese Weise kann der Lichtstrahl über die krümmungsaußenseitige Oberfläche des Kartenkörpers geleitet werden und dadurch ein vollständiges zweidimensionales Schattenbild einer Seitenansicht der kugelartig ausgebildeten aufgetragenen Masse in eine hierfür vorgesehene Kameraeinrichtung projizieren.

Ein derartiges Messverfahren ermöglicht nicht nur das schnelle und einfache, berührungslose Messen der Auftragshöhe der aufgetragenen Masse innerhalb der ausgefrästen Ausnehmung zur späteren Aufnahme des Chipmoduls, sondern auch die Messung verschiedenstartiger Chipkarten, welche sich in der Overlay-Farbe und der Overlay-Dicke unterscheiden.

Mittels einer Auswerteeinrichtung zum Auswerten von Abbildungsdaten mit Hilfe eines Bildverarbeitungsprogrammes ist nicht nur eine Messung mit hoher Messgenauigkeit von +/- 8µm, sondern auch die Bildverarbeitung bezüglich der äußeren Konturen der durch die Abbildungsdaten wiedergegebenen Abbildung, wie beispielsweise die Berücksichtigung von Unregelmäßigkeiten im Randbereich der Masse, die durch Abziehnasen hervorgerufen werden können, möglich.

Um eine verzerrungsfreie Seitenansicht eines derartigen Massepunktes zu erhalten, ist es wichtig, dass die Kameraeinrichtung bezüglich der in sie einfallenden Lichtstrahlen derart seitlich im Bereich der Krümmung auf die Masse gerichtet ist, dass eine senkrecht zu einer Lichteinfallsebene der Kameraeinrichtung gedachte Gerade, deren Verlauf über Prismen umgelenkt werden kann, geradlinig an der Krümmung des Kartenkörpers tangentenartig entlang verläuft. Diese Gerade und eine senkrecht auf der Oberfläche des Kartenkörpers im Bereich des Massemittelpunktes der Masse stehende gedachte Gerade schließen einen Winkel von 90° ein. Andernfalls würde das in der Kameraeinrichtung empfangene Schattenbild der Seitenansicht des Massepunktes zu einer verzerrten Ansicht und somit zu der Ermittlung einer geringeren Auftragshöhe des Massepunktes führen.

Der Kartenkörper wird mit seinen Seitenkanten in die Biegeeinrichtung eingespannt, welche den Kartenkörper durch Zusammendrücken in eine Biegestellung, deren maximale Auslenkung 9 - 11 mm beträgt, bringt. Auf diese Weise ist ein beschädigungsfreies Verbiegen des flexiblen Kartenkörpers sichergestellt.

Gemäß einer bevorzugten Ausführungsform vergleicht die Auswerteeinrichtung in dem Bildverarbeitungsverfahren Abbildungswerte der Tiefe der Ausnehmung, die zur späteren Aufnahme des Chipmoduls dienen, mit den Abbildungswerten der Auftragshöhe und bildet hiervon die jeweiligen Differenzbeträge, um hierdurch Abweichungen in der Auftragshöhe der in verschiedenen Kartenkörpem angeordneten Massepunkte mit Bezug auf eine untere Fläche der Ausnehmung, die als Referenzfläche dient, feststellen zu können. Hierbei wird der jeweils höchste Punkt des Massepunktes und dessen zulässige Abweichung ermittelt. Sofern die gemessene Auftragshöhe nicht innerhalb der zulässigen Abweichung liegt, wird entweder die Chipkarte aussortiert oder ein nochmaliges Auftragen der Masse durchgeführt.

Um den Winkel von 90° zwischen der senkrecht zur gekrümmten Oberfläche des Kartenkörpers ausgerichteten Gerade und der Ausrichtungsgeraden der Kameraeinrichtung zu erhalten, kann eine Messeinrichtung, welche eine Lichtquelle, die Kameraeinrichtung und Prismen zum Umlenken des Lichtstrahles umfasst, im Bezug auf die Biegeeinrichtung derart verschwenkt werden, dass der zu messende Massepunkt an der obersten Stelle, bezogen auf die Biegeeinrichtung der Krümmung des Kartenkörpers, scheitelartig angeordnet ist. Hierdurch wird vermieden, dass nur Teile der Seitenansicht des Massepunktes, sofern dieser nicht mit einem Winkel von 90° durch die Ausrichtungsgerade der Kameraeinrichtung getroffen wird, abgebildet und dadurch falsche Messergebnisse erzeugt werden.

Vorteilhaft weist eine Vorrichtung zur Herstellung der Chipkarten die Biegeeinrichtung zum kontrollierten Biegen des Kartenkörpers, die Lichtquelle zur Erzeugung mindestens eines Lichtstrahls, der seitlich auf die aufgetragene Masse gerichtet ist, die Kameraeinrichtung zur Aufnahme der durch den Lichtstrahl erzeugten Abbildung der Auftragshöhe der Masse/des Massepunktes relativ zum Kartenkörper und die Auswerteeinrichtung zum Auswerten der Abbildungsdaten mittels eines Bildverarbeitungsverfahrens auf.

Weitere vorteilhafte Ausführungsformen ergeben sich aus den Unteransprüchen.

Vorteile und Zweckmäßigkeiten sind der nachfolgenden Beschreibung in Verbindung mit der Zeichnung zu entnehmen. Hierbei zeigen:
- Fig. 1: in einer schematischen Querschnittsansicht einen Ausschnitt einer Chipkarte von dem Einsetzen eines Chipmoduls in einen Kartenkörper;
- Fig. 2: in einer schematischen Seitenansicht eine erfindungsgemäße Vorrichtung zur Durchführung des erfindungsgemäßen Verfahrens gemäß einer Ausführungsform der Erfindung;
- Fig. 3a - 3d: in perspektivischen und Querschnittsansichten eine Chipkarte vor und während des Biegezustandes und
- Fig. 4: in einer schematischen Seitenansicht eine Vorrichtung zum Messen der Auftragshöhe einer aufgetragenen Masse gemäß einer weiteren Ausführungsform der vorliegenden Erfindung.

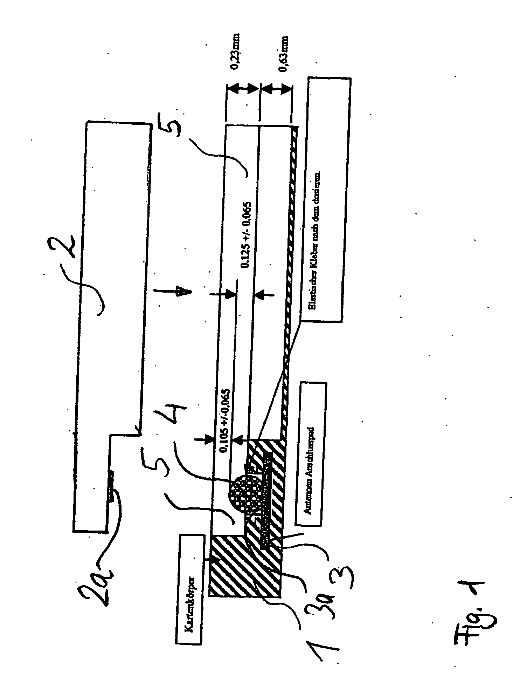

In Fig. 1 wird in einer schematischen Querschnittsansicht ausschnittsweise eine Chipkarte von dem Einsetzen eines Chipmoduls gezeigt, wie sie mit dem erfindungsgemäßen Verfahren hergestellt werden kann. Die Chipkarte weist einen Kartenkörper 1 auf, in welchem ein Chipmodul 2 mit einer ersten Kontaktfläche 2a, die an der Unterseite des Chipmoduls angeordnet ist, wie durch den Pfeil angedeutet, eingesetzt wird. Eine in dem Kartenkörper integriert angeordnete Antenne 3 mit einer oberseitigen Kontaktfläche 3a ist mit einem elektrisch leitfähigen Massepunkt 4, wie einem flexible bumb verbunden. Hierfür ist der Massepunkt mittels einer hier nicht gezeigten Dosiereinrichtung auf die Kontaktfläche 3a aufgetragen worden.

Eine Ausnehmung 5 dient zur Aufnahme des Chipmoduls 2. Wenn das Chipmodul 2 eingesetzt wird, so ergibt sich bei richtiger Mengendosierung des Massepunktes 4 durch flexibles Zusammendrücken desjenigen ein dauerhafter Kontakt zwischen den beiden Kontaktflächen 2a und 3a.

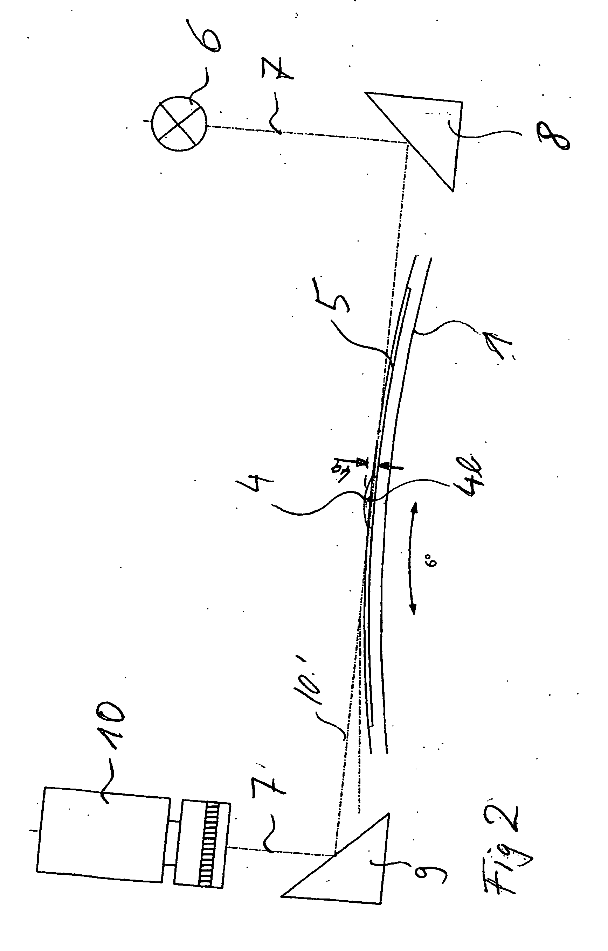

In Fig. 2 wird in einer schematischen Seitenansicht eine Vorrichtung zur Herstellung einer Chipkarte gemäß einer ersten Ausführungsform der Erfindung gezeigt. Der Fig. 2 ist zu entnehmen, dass der Kartenkörper 1 mittels einer hier nicht gezeigten Biegeeinrichtung derart gebogen ist, dass an seiner krümmungsaußenseitigen Oberfläche der Massepunkt 4 mit einer Auftragshöhe 4a und einem Massemittelpunkt 4b scheitelartig angeordnet ist.

Zwar ist der Massepunkt 4 innerhalb der Ausnehmung 5 angeordnet, jedoch kann durch das Verbiegen des Kartenkörpers 1 erreicht werden, dass ein aus einer Lichtquelle 6 austretender Lichtstrahl 7 dennoch die gesamte Auftragshöhe 4a befeuchten kann, da störende Randbereiche des Kartenkörpers 1 nach unten gebogen sind.

Mittels Prismen 8 und 9 ist ein Umlenken des Lichtstrahles 7 in eine Kameraeinrichtung 10 möglich, so dass eine platzsparende und kompakte Anordnung der gesamten Messeinrichtung, die sich aus der Lichtquelle 6, den Prismen 8, 9 und der Kameraeinrichtung 10 zusammensetzt, möglich ist.

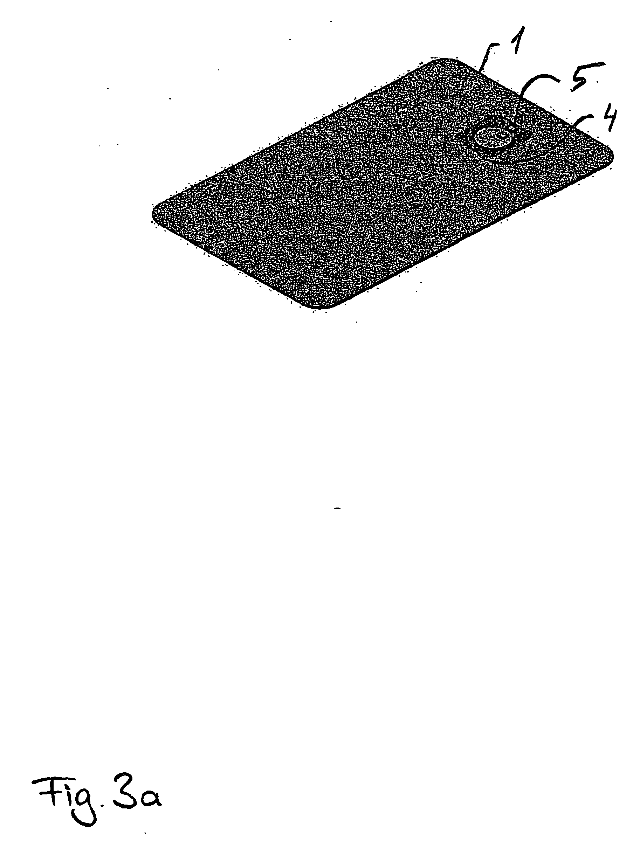

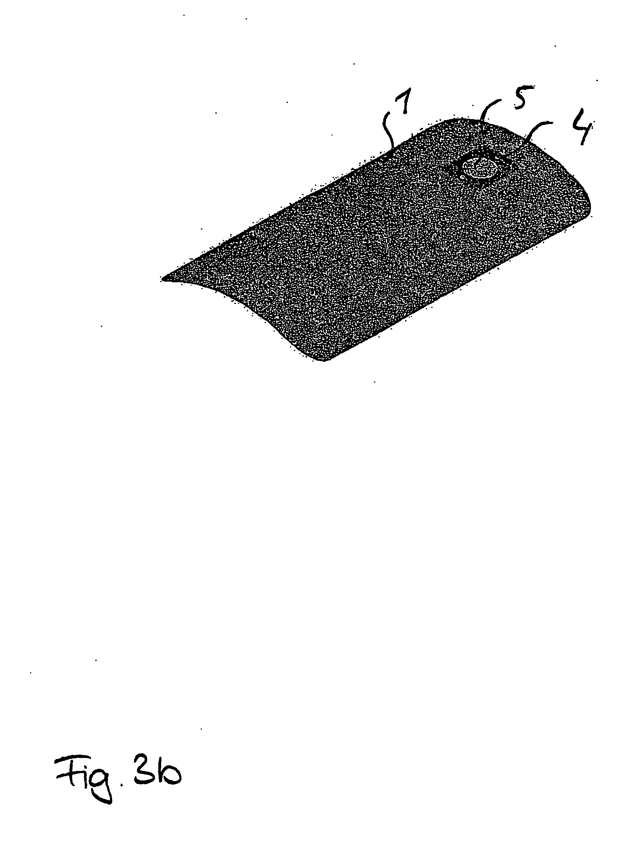

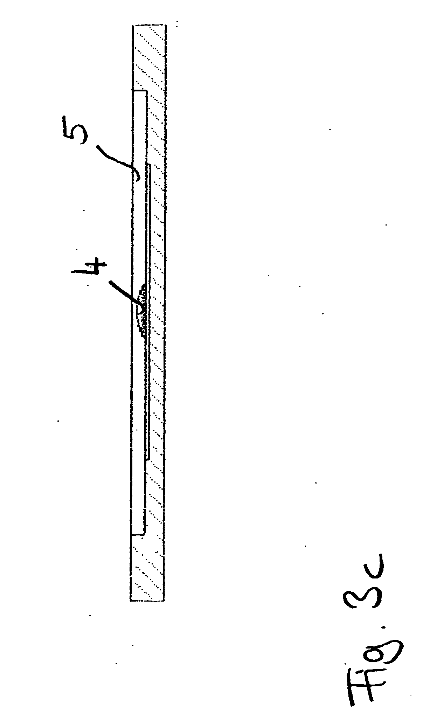

In Fig. 3a wird in einer perspektivischen Ansicht eine Chipkarte mit dem Kartenkörper 1 und einer Ausnehmung 5 zum Einsetzen des Chipmodules in ungebogenem Zustand gezeigt. Demgegenüber ist der Fig. 3b die Chipkarte im gebogenen Zustand zu entnehmen. Die Massepunkte 4 innerhalb der Ausnehmung 5 können aufgrund ihrer Scheitellinienlage zuverlässig in ihrer Höhe vermessen werden.

Den Figuren 3c und 3d sind zu den Figuren 3a und 3b zugehörige Querschnittsansichten der Chipkarten zu entnehmen, wobei aus Fig. 3d ersichtlich wird, dass eine senkrecht zu der Oberfläche des gekrümmten Kartenkörpers 1 durch den Massemittelpunkt 4b der Masse 4 durchlaufende Gerade 11 im 90°-Winkel zu dem einfallenden Lichtstrahl 7 als auch zu einer Ausrichtungsgeraden 10' der Kameraeinrichtung stehen muss.

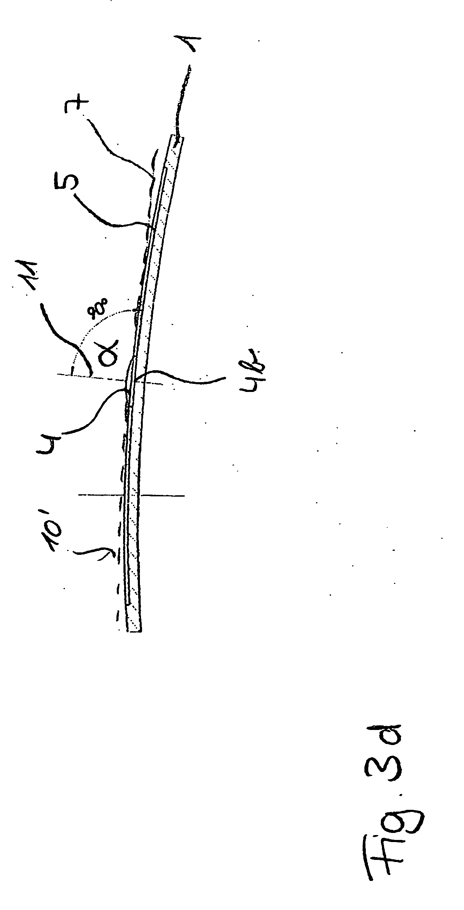

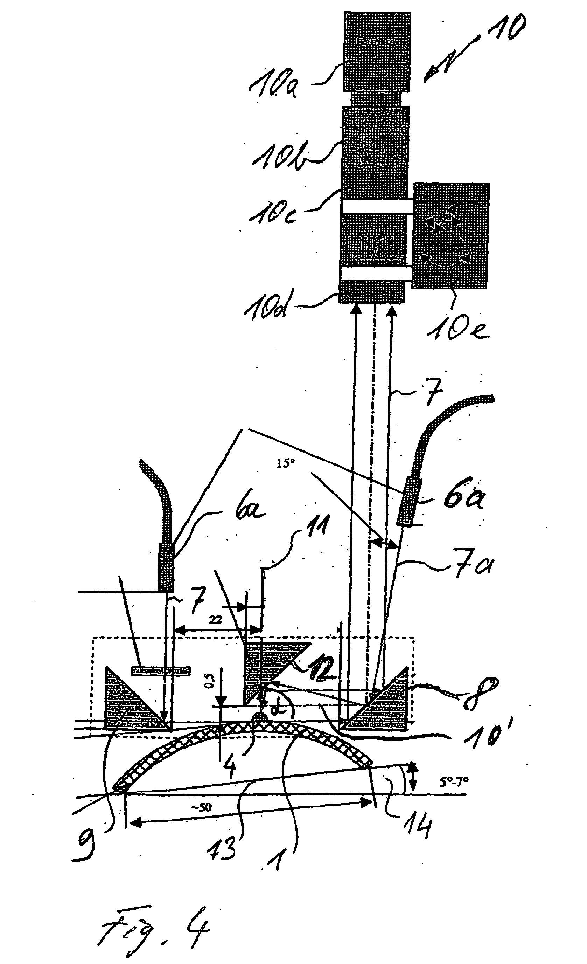

In Fig. 4 ist in einer Seitenansicht eine erfindungsgemäße Vorrichtung gemäß einer zweiten Ausführungsform der Erfindung dargestellt. In dieser Vorrichtung ist neben der den Lichtstrahl 7 erzeugenden Lichtquelle 6 eine zusätzliche Lichtquelle 6a angeordnet, die zur Beleuchtung des Massepunktes 4 mittels eines Lichtstrahles 7a dient. Zur Umlenkung des Lichtstrahles 7a ist zusätzlich ein Prisma 12 angeordnet.

Die Kameraeinrichtung 10 setzt sich aus einer Matrixkamera 10a, einem Zwischenring 10b, einem Standardobjektiv 10c, 10d und einer Manipulierungseinrichtung 10e zum Ausrichten der Kameraeinrichtung in x-, y- und z-Richtung zusammen.

Der Fig. 4 ist deutlich zu entnehmen, dass, wenn der Massepunkt 4 nicht mittig zwischen in die Biegeeinrichtung eingespannten Enden auf dem Kartenkörper 1 angeordnet ist, die hier nicht gezeigte Biegeeinrichtung um einen Winke! 14 mit 5 - 7° geschwenkt wird, wie es durch die Linie 13 verdeutlicht wird. Auf diese Weise ist ein verzerrungsfreies Erfassen des Massepunktes 4 durch den einfallenden Lichtstrahl 7 über dessen gesamte Auftragshöhe möglich.

Sämtliche in den Anmeldungsunterlagen offenbarten Merkmale werden als erfindungswesentlich beansprucht, sofern sie einzeln oder in Kombination gegenüber dem Stand der Technik neu sind.

### Bezugszeichenliste

- 1: Kartenkörper
- 2: Chipmodul
- 2a: erste Kontaktfläche
- 3: Antenne
- 3a: zweite Kontaktfläche
- 4: Massepunkt
- 4a =̂: Auftragshöhe
- 4b =̂: Massemittelpunkt
- 5: Ausnehmung
- 6, 6a: Lichtquellen
- 7, 7a: Lichtstrahlen
- 8, 9, 12: Prismen
- 10; 10a - 10e: Kameraeinrichtung
- 10': Ausrichtungsgerade der Kameraeinrichtung im Bereich der Masse
- 11: Gerade
- 13: Linie
- 14: Winkel
- α: Winkel zwischen einfallendem Lichtstrahl und einer Geraden

## Patentansprüche

1. Verfahren zur Herstellung von Chipkarten mit einem mindestens eine erste Kontaktfläche (2a) aufweisenden ersten Bauteil (2), wie ein Chipmodul oder dergleichen, und einem in oder auf einem Kartenkörper (1) angeordneten zweiten Bauteil (3), wie eine Antenne oder dergleichen, wobei eine elektrisch leitfähige Masse (4), wie Leitklebstoff oder dergleichen, mittels einer Dosiereinrichtung auf mindestens eine zweite Kontaktfläche (3a) des zweiten Bauteils (3) jeweils aufgetragen wird, um die erste und die zweite Kontaktfläche (2a, 3a) miteinander zu verbinden,
**dadurch gekennzeichnet,dass**
in einem ersten Schritt der Kartenkörper (1) mittels einer Biegeeinrichtung derart gebogen wird, dass er in seinem Verlauf eine Krümmung aufweist und die in einer Ausnehmung (5) des Kartenkörpers (1) zur späteren Aufnahme des ersten Bauteils (2) aufgetragene Masse (4) krümmungsaußenseitig angeordnet ist, und
in einem zweiten Schritt mindestens ein Lichtstrahl (7) aus einer Lichtquelle (6) seitlich auf die aufgetragene Masse (4) zur Messung einer Auftragshöhe (4a) der elektrisch leitfähigen Masse (4) relativ zum Kartenkörper (1) mittels einer optischen Abbildung der Auftragshöhe (4a) gerichtet wird.

2. Verfahren nach Anspruch 1,
**dadurch gekennzeichnet,dass**
eine Kameraeinrichtung (10; 10a - 10e) zur Aufnahme der Abbildung der Auftragshöhe (4a) derart seitlich auf die Masse (4) gerichtet ist, dass eine senkrecht zu einer Lichteinfallsebene der Kameraeinrichtung (10; 10a -10e) gedachte Gerade (10') geradlinig an der krümmungsaußenseitigen Oberfläche des Kartenkörpers (1) im Bereich der Masse (4) tangentenartig entlang verläuft.

3. Verfahren nach Anspruch 2,
**dadurch gekennzeichnet, dass**
die gedachte Gerade (10') und eine senkrecht auf der Oberfläche des Kartenkörpers (1) im Bereich des Massemittelpunktes (4b) stehende gedachte Gerade (11) einen Winkel (α) von 90° einschließen.

4. Verfahren nach einem der vorangegangenen Ansprüche,
**dadurch gekennzeichnet, dass**
mindestens einer der Lichtstrahlen (7) geradlinig an der krümmungsaußenseitigen Oberfläche des Kartenkörpers (1) entlang verläuft.

5. Verfahren nach Anspruch 4,
**dadurch gekennzeichnet,dass**
die aufgenommene Abbildung mittels einer mit der Kameraeinrichtung (10; 10a - 10e) verbundenen Auswerteeinrichtung zum Auswerten von Abbildungsdaten ein Bildverarbeitungsverfahren durchläuft.

6. Verfahren nach Anspruch 5,
**dadurch gekennzeichnet,dass**
in dem Bildverarbeitungsverfahren gemessene Abbildungswerte der Tiefe der Ausnehmung (5) ausgewertet und mit den Abbildungswerten der Auftragshöhe (4a) verglichen werden und Differenzwerte derjenigen gebildet werden.

7. Verfahren nach Anspruch 5 oder 6,
**dadurch gekennzeichnet,dass**
in dem Bildverarbeitungsverfahren Vergleichsabbildungsdaten früherer Referenzmessungen zum Auswerten der Auftragshöhe (4a) verwendet werden.

8. Verfahren nach einem der Ansprüche 4-7,
**dadurch gekennzeichnet,dass**
zur Einstellung des Winkels (α) eine Messeinrichtung, welche die Lichtquelle (6, 6a), die Kameraeinrichtung (10; 10a -10e) und Prismen (8, 9, 12) zum Umlenken des Lichtstrahls (7, 7a) umfasst und/oder die gebogene Oberfläche des Kartenkörpers (1) solange relativ zueinander verschwenkt werden/wird, bis sich ein Winkel (α) von 90° eingestellt hat.

9. Vorrichtung zur Herstellung von Chipkarten mit einem mindestens eine erste Kontaktfläche (2a) aufweisenden ersten Bauteil (2), wie ein Chipmodul oder dergleichen, und einem in oder auf einem Kartenkörper (1) angeordneten zweiten Bauteil (3), wie eine Antenne oder dergleichen, wobei eine elektrisch leitfähige Masse (4), wie Leitklebstoff oder dergleichen, mittels einer Dosiereinrichtung auf mindestens eine zweite Kontaktfläche (3a) des zweiten Bauteils (3), jeweils aufgetragen wird, um die erste und die zweite Kontaktfläche (2a, 3a) miteinander zu verbinden, umfassend:
- eine Biegeeinrichtung zum kontrollierten Biegen des Kartenkörpers (1) derart, dass er in seinem Verlauf eine Krümmung aufweist, wobei die in einer Ausnehmung (5) des Kartenkörpers (1) zur späteren Aufnahme des ersten Bauteils (2) aufgetragene Masse (4) krümmungsaußenseitig angeordnet ist,
- eine Lichtquelle (6) zur Erzeugung mindestens eines Lichtstrahls (7), der seitlich auf die aufgetragene Masse (4) gerichtet ist,
- eine Kameraeinrichtung (10; 10a -10e) zu Aufnahme einer durch den Lichtstrahl (7) erzeugten Abbildung einer Auftragshöhe (4a) der Masse (4) relativ zum Kartenkörper (1) und
- eine Auswerteeinrichtung zum Auswerten von Abbildungsdaten mittels eines Bildverarbeitungsverfahrens.

10. Vorrichtung nach Anspruch 9,
**dadurch gekennzeichnet,dass**
eine Messeinrichtung, welche die Lichtquelle (6, 6a), die Kameraeinrichtung (10; 10a -10e) und gegebenenfalls Prismen (8, 9, 12) zum Umlenken des Lichtstrahls (7, 7a) umfasst, und/oder die Biegeeinrichtung relativ zueinander verschwenkbar sind/ist, um eine Ausrichtung der Kameraeinrichtung (10; 10a -10e) im Verhältnis zur Oberfläche des Kartenkörpers (1) am Ort der aufgetragenen Masse (4) in einem vorbestimmten Winkel (α) zu erhalten.

11. Vorrichtung nach Anspruch 10,
**dadurch gekennzeichnet,dass**
der Winkel (α) zwischen dem Ausrichtungsverlauf der Kameraeinrichtung (10; 10a - 10e) und einer senkrecht auf der Oberfläche des Kartenkörpers (1) im Bereich des Massemittelpunktes (4b) stehenden gedachten Gerade (11) 90° ist.

12. Vorrichtung nach einem der Ansprüche 9-11,
**dadurch gekennzeichnet, dass**
mit der Auswerteeinrichtung gemessene Abbildungswerte der Tiefe der Ausnehmung (5) auswertbar und mit den Abbildungswerten der Auftragshöhe (4a) vergleichbar sind.

## Claims

1. Method for producing chip cards comprising a first component (2), such as a chip module or the like, with a first contact surface (2a), and a second component (3), such as an antenna or the like, arranged in or on a card body (1), wherein an electrically conductive mass (4), such as conductive adhesive or the like, is applied to at least a second contact surface (3a) of the second component (3) by means of a metering device, in order to connect the first and second contact surfaces (2a, 3a) to one another,
**characterized in that**,
in a first step, the card body (1) is bent by means of a bending device in such a way that it has a curvature in its profile and the mass (4) applied in a recess (5) of the card body (1) for subsequently receiving the first component (2) is arranged on the outer side of the curve, and, in a second step, at least one light beam (7) from a light source (6) is oriented laterally onto the applied mass (4) for measuring an application height (4a) of the electrically conductive mass (4) relative to the card body (1) by means of an optical image of the application height (4a).

2. Method according to Claim 1,
**characterized in that**
a camera device (10; 10a - 10e) for recording the image of the application height (4a) is oriented laterally onto the mass (4) in such a way that an imaginary straight line (10') perpendicular to a light incidence plane of the camera device (10; 10a -10e) runs tangentially in a straight line along the surface on the outer side of the curve of the card body (1) in the region of the mass (4).

3. Method according to Claim 2,
**characterized in that**
the imaginary straight line (10') and an imaginary straight line (11) perpendicular to the surface of the card body (1) in the region of the mass centre point (4b) enclose an angle (α) of 90°.

4. Method according to any of the preceding claims,
**characterized in that**
at least one of the light beams (7) runs in a straight line along the surface on the outer side of the curve of the card body (1).

5. Method according to Claim 4,
**characterized in that**
the recorded image runs through an image processing method by means of an evaluation device for evaluating image data, said evaluation device being connected to the camera device (10; 10a - 10e).

6. Method according to Claim 5,
**characterized in that**,
in the image processing method, measured image values regarding the depth of the recess (5) are evaluated and compared with the image values regarding the application height (4a), and difference values thereof are formed.

7. Method according to Claim 5 or 6,
**characterized in that**,
in the image processing method, comparative image data from earlier reference measurements are used to evaluate the application height (4a).

8. Method according to any of Claims 4-7,
**characterized in that**,
in order to set the angle (α), a measuring device which comprises the light source (6, 6a), the camera device (10; 10a - 10e) and prisms (8, 9, 12) for deflecting the light beam (7, 7a) and/or the bent surface of the card body (1) is/are pivoted relative to one another until an angle (α) of 90° has been set.

9. Device for producing chip cards comprising a first component (2), such as a chip module or the like, with a first contact surface (2a), and a second component (3), such as an antenna or the like, arranged in or on a card body (1), wherein an electrically conductive mass (4), such as conductive adhesive or the like, is applied to at least a second contact surface (3a) of the second component (3) by means of a metering device, in order to connect the first and second contact surfaces (2a, 3a) to one another, said device comprising:
- a bending device for the controlled bending of the card body (1) in such a way that it has a curvature in its profile, wherein the mass (4) applied in a recess (5) of the card body (1) for subsequently receiving the first component (2) is arranged on the outer side of the curve,
- a light source (6) for generating at least one light beam (7) which is oriented laterally onto the applied mass (4),
- a camera device (10; 10a - 10e) for recording an image of an application height (4a) of the mass (4) relative to the card body (1), said image being produced by the light beam (7) and
- an evaluation device for evaluating image data by means of an image processing method.

10. Device according to Claim 9,
**characterized in that**
a measuring device which comprises the light source (6, 6a), the camera device (10; 10a - 10e) and optionally prisms (8, 9, 12) for deflecting the light beam (7, 7a) and/or the bending device can be pivoted relative to one another in order to obtain an orientation of the camera device (10; 10a - 10e) in relation to the surface of the card body (1) at the location of the applied mass (4) at a predefined angle (α).

11. Device according to Claim 10,
**characterized in that**
the angle (α) between the orientation of the camera device (10; 10a - 10e) and an imaginary straight line (11) perpendicular to the surface of the card body (1) in the region of the mass centre point (4b) is 90°.

12. Device according to any of Claims 9-11,
**characterized in that**,
by means of the evaluation device, measured image values regarding the depth of the recess (5) can be evaluated and compared with the image values regarding the application height (4a).

## Revendications

1. Procédé de fabrication de cartes à puce avec un premier composant (2) présentant une au moins une première surface de contact (2a), tel qu'un module de puce ou similaire, et un second composant (3) agencé dans ou sur un corps de carte (1), tel qu'une antenne ou similaire, une masse électroconductrice (4), telle qu'une colle conductrice ou similaire, au moyen d'un dispositif de dosage étant appliquée respectivement sur au moins une deuxième surface de contact (3a) du second composant (3) pour raccorder les première et deuxième surfaces de contact (2a, 3a) l'une à l'autre, **caractérisé en ce que**, dans une première étape, on plie le corps de carte (1) au moyen d'un dispositif de pliage de sorte que son aspect présente une courbe et que la masse appliquée (4) dans un évidement (5) du corps de carte (1) destiné à recevoir ultérieurement le premier composant (2) soit agencée du côté extérieur de la courbure et, dans une seconde étape, on dirige au moins un rayon lumineux (7) d'une source lumineuse (6) latéralement sur la masse appliquée (4) pour mesurer une hauteur d'application (4a) de la masse électroconductrice (4) par rapport au corps de carte (1) au moyen d'une représentation optique de la hauteur d'application (4a).

2. Procédé selon la revendication 1, **caractérisé en ce qu'**un dispositif à caméra (10; 10a à 10e) destiné à enregistrer la représentation de la hauteur d'application (4a) est dirigé latéralement sur la masse (4) de sorte qu'une droite imaginaire (10') perpendiculaire au plan d'incidence de la lumière du dispositif à caméra (10; 10a - 10e) s'étende de manière linéaire le long de la surface du corps de carte (1) du côté extérieur de la courbure en mode tangentiel dans la zone de la masse (4).

3. Procédé selon la revendication 2, **caractérisé en ce que** la droite imaginaire (10') et une droite imaginaire (11) qui se situe perpendiculairement à la surface du corps de carte (1) dans la zone du centre de masse (4b) inscrivent un angle (a) de 90°.

4. Procédé selon l'une quelconque des revendications précédentes, **caractérisé en ce qu'**au moins un des rayons lumineux (7) s'étend de manière linéaire le long de la surface du corps de carte (1) du côté extérieur de la courbure.

5. Procédé selon la revendication 4, **caractérisé en ce que** la représentation enregistrée traverse un procédé de traitement d'image au moyen d'un dispositif d'exploitation raccordé au dispositif à caméra (10; 10a - 10e) et destiné à l'exploitation de données de représentation.

6. Procédé selon la revendication 5, **caractérisé en ce que** l'on exploite les valeurs de représentation de la profondeur de l'évidement (5) mesurées dans le procédé de traitement d'image et on les compare aux valeurs de représentation de la hauteur d'application (4a) et **en ce que** l'on établit leurs valeurs différentielles.

7. Procédé selon la revendication 5 ou 6, **caractérisé en ce que**, dans le procédé de traitement d'image, on utilise des données de représentation comparatives de mesures de référence antérieures pour évaluer la hauteur d'application (4a).

8. Procédé selon l'une quelconque des revendications 4 à 7, **caractérisé en ce que**, pour ajuster l'angle (α), on fait pivoter un dispositif de mesure comprenant la source lumineuse (6, 6a), le dispositif à caméra (10; 10a à 10e) et des prismes (8, 9, 12) pour dévier le rayon lumineux (7, 7a), et/ou la surface pliée du corps de carte (1) l'un par rapport à l'autre jusqu'à ce qu'un angle (α) de 90° soit ajusté.

9. Procédé de fabrication de cartes à puce avec un premier composant (2) présentant au moins une première surface de contact (2a), tel qu'un module de puce ou similaire, et un second composant (3) agencé dans ou sur un corps de carte (1), tel qu'une antenne ou similaire, et dans lequel on applique respectivement une masse électroconductrice (4) telle qu'une colle conductrice ou similaire, au moyen d'un dispositif de dosage, sur au moins une deuxième surface de contact (3a) du second composant (3) pour raccorder les première et deuxième surfaces de contact (2a, 3a) l'une à l'autre, comprenant :
- un dispositif de pliage pour le pliage contrôlé du corps de carte (1) de manière que son aspect présente une courbe, la masse (4) appliquée dans un évidement (5) du corps de carte (1) destiné à recevoir ultérieurement le premier composant (2) étant agencée du côté extérieur de la courbure,
- une source lumineuse (6) pour générer au moins un rayon lumineux (7) qui est dirigé latéralement sur la masse appliquée (4),
- un dispositif à caméra (10; 10a à 10e) pour enregistrer une représentation, produite par le rayon lumineux (7), d'une hauteur d'application (4a) de la masse (4) par rapport au corps de carte (1) et
- un dispositif d'exploitation pour exploiter des données de représentation au moyen d'un procédé de traitement d'image.

10. Dispositif selon la revendication 9, **caractérisé en ce que** l'on peut faire pivoter un dispositif de mesure qui comprend la source lumineuse (6, 6a), le dispositif à caméra (10; 10a à 10e) et éventuellement des prismes (8, 9, 12) pour dévier le rayon lumineux (7, 7a), et/ou le dispositif de pliage l'un par rapport à l'autre pour obtenir un alignement du dispositif de caméra (10; 10a - 10e) par rapport à la surface du corps de carte (1) à l'endroit de la masse appliquée (4) dans un angle prédéfini (α).

11. Dispositif selon la revendication 10, **caractérisé en ce que** l'angle (α) entre l'alignement du dispositif de caméra (10; 10a -10e) et une droite imaginaire (11) qui se situe perpendiculairement à la surface du corps de carte dans la zone du centre de masse (4b) est de 90°.

12. Dispositif selon l'une quelconque des revendications 9 à 11, **caractérisé en ce que** l'on peut exploiter les valeurs de représentation de la profondeur d'évidement (5) mesurées avec le dispositif d'exploitation et les comparer aux valeurs de représentation de la hauteur d'application (4a).
